# EUROPEAN PATENT SPECIFICATION

(11) **EP 1 549 571 B1**
(45) Date of publication and mention of the grant of the patent: **25.01.2006**
(21) Application number: 03795538.2
(22) Date of filing: 12.09.2003
(51) Int. Cl.: B65D 85/48, B65D 57/00, B65D 81/05, B65D 49/06

(54) **SPACER BETWEEN SHEET UNITS**
ABSTANDSSTÜCK ZWISCHEN PLATTENEINHEITEN
INTERCALAIRE ENTRE DES UNITES EN PLAQUE

(30) Priority: 13.09.2002 SE 0202757
(43) Date of publication of application: 06.07.2005
(73) Proprietor: Eriksson, Lars, 361 31 Emmaboda (SE)
(72) Inventor: Eriksson, Lars, 361 31 Emmaboda (SE)
(74) Representative: Bjelkstam, Peter
(86) International application number: PCT/SE2003/001430
(87) International publication number: WO 2004/024598

(56) References cited:
- EP-A1- 0 830 977
- EP-A2- 0 130 922
- EP-A2- 0 838 411
- DE-U- 1 953 181
- DE-U1- 9 114 168
- FR-A1- 2 548 632
- US-B1- 6 478 354

## Description

The present invention refers to a spacer creating a space and absorbing loads between sheet units, preferably glass sheets in a packaging arrangement, whereby the spacer is manufactured as a extruded profile that comprises longitudinal cavities, which saves material and constitutes a framework, which in turn increases the ability to absorb loads for reducing the load between the glass sheets.

Spacers are currently used with commercially available arrangements of the design under consideration that create a distance between glass sheets, in order to obtain access to unload several glass sheets, in the form of glass packages, at once. The spacers also absorb loads, pressure, relative motion between the glass sheets when they are packaged in or on a packaging arrangement, preferably a support. These spacers are currently manufactured from paper board, which does not in principle withstand very well the effects of damp, light, dirt, foreign objects, chemicals, etc., whereby they are used as disposable materials, whereby most of them are discarded after use. During unloading of the glass sheets from the support, the spacers are sequentially freed and end up on the workshop floor of a glass consumer, such as, for example, a manufacturer of insulated windows, a glass hardening plant, or similar. This creates untidiness, and this is why the spacers are eventually tidied up and thrown away. This involves an expensive and time-consuming handling, and an expensive cost for materials. Nearly none of the spacers are returned to the manufacturer of glass sheets such as Pilkington, St. Gobain, Glaverbel, and this is why new spacers must be continuously purchased, something that is expensive and time-consuming. Furthermore, there may be long delivery times for new spacers, since these are an item that is in short supply.

The object of the present invention is to solve the problems described above by extruding the spacers in an extrusion tool, whereby they can be manufactured in a more efficient manner from a material that is more resistant to wear and that is cheap, resistant to blows and easy to handle, whereby it is easy to reuse the spacers many times.

Thanks to the invention a spacer is achieved which is resistant to the influences mentioned above and which is easy to handle, can resist mechanical damage and which can be reused many times. The spacer is manufactured preferably from plastic, rubber, metal or combinations of these materials, which resist the effects of preferably damp, light, dirt, foreign objects, chemicals, etc., and which, furthermore, resist more mechanical damage and are resistant to blows. The material is extruded in long pieces in an extrusion machine through an extrusion tool, whereby the pieces can be cut to suitable lengths for a rapid and efficient manufacture, whereby said lengths are adapted to correspond essentially to the height and/or width of the glass sheets. The extrusion of the material through the extrusion tool means that longitudinal cavities are produced, which may be open or closed, whereby they are fully or partially enclosed by one or several walls that form a framework in the spacer, which creates, in an excellent manner, reduction in load and distance between the glass sheets or glass packages. The walls can be kept thin while still retaining good static properties that provide good reduction in load, whereby the spacers can be created using a minimum of material consumption, which is why they will also be light in weight. The cavities may, according to the invention, demonstrate various shapes in cross-section such as, for example, U-shape, honeycomb, triangular shape, rectangular shape, circular shape, elliptical shape, or similar, or combinations of these shapes. The spacer comprises an enclosing skin, which partially constitutes the area of contact against the glass sheets. The spacer according to the invention acts as a spring and has a suitable flexibility and resists pressure and can equalise contact pressure between the glass packages, whereby a gentle contact against the glass packages is achieved. In order to be able to put the spacers in place more easily during packaging of the glass sheets, one end of the spacers is provided with holders, which grip the upper edge of the glass packages and remain suspended there until all are in the correct place, whereby the next glass sheet is placed in the correct place whereby the spacers, which have been suspended, are more firmly fixed, in that the glass sheet leans against them. The holders are oriented 90° to one side relative to the longitudinal direction of the spacers and offer anchoring elements that are principally oriented along a direction downwards to the end of the cavity in the spacer, whereby the anchoring elements can, through friction, gluing, screwing, snap-on attachment, etc., grip the walls of the cavity that are parallel to the longitudinal direction of the spacer. The principal advantages of the invention, thus, are that the spacers are extruded with cavities and frameworks, something that is efficient, cheap and gives the ability to bear loads, bear motion and create distance. The extrusion, choice of material and the framework provide resistance to blows, resistance to other influences and spacers that are easy to handle, light in weight, that can be reused many times, something that is many times cheaper than the prior art. Furthermore, the extrusion provides a cheap and efficient manner in which to produce the spacers.

The invention will be described in more detail below with the aid of preferred embodiments, in which:
- Fig. 1: shows a view in perspective of a spacer seen obliquely from underneath from one side,
- Fig. 2: shows a packaging arrangement with glass packages with intermediate spacers seen in a view from one end,
- Fig. 3: shows vertical cross-sections in parts a)-h) of various designs of cavities in a spacer, and
- Fig. 4: shows in parts i) and j) part of one end of a spacer in a vertical cross-section with associated holders before it has been anchored in part i), and after it has been anchored with its anchoring elements to the end of the spacer in part j).

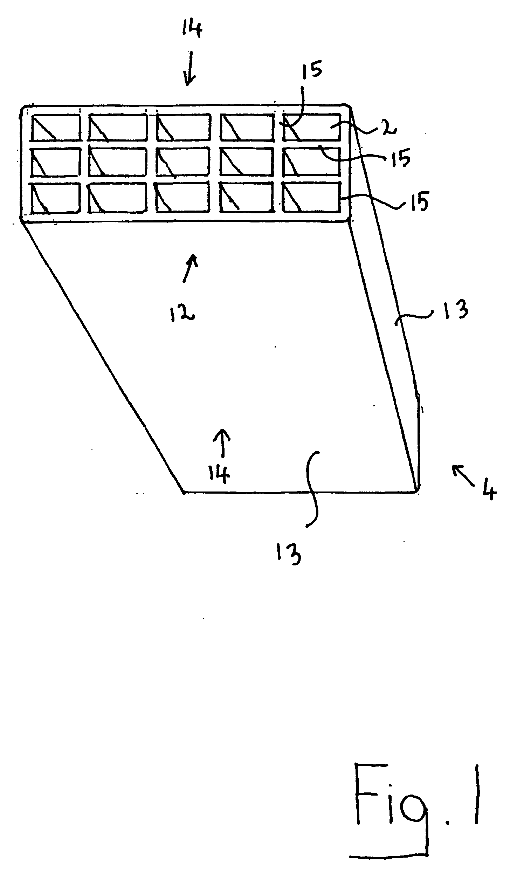

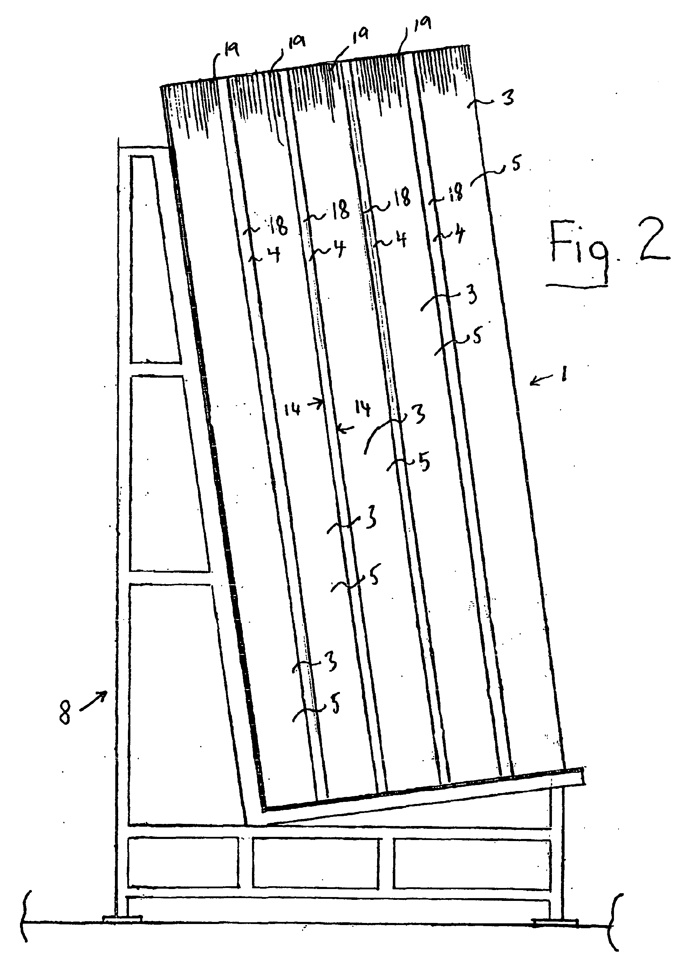

As the embodiment of the invention that is shown in Fig. 1 and 2 makes clear, there is shown a spacer 4, one or several of which create distance and/or absorb loads, pressure, relative motion, etc., between glass sheets 3 or between glass packages 5 packed onto a packaging arrangement 1 in the form of a support 8. The spacer 4 is manufactured as an extruded profile that comprises longitudinal cavities 2 with intermediate, surrounding walls 15, which together form a framework 12, which comprises an enclosing skin 13. A number of spacers 4 are located between the glass packages 5 in order to create a distance 18 between the glass sheets 3 and/or between the glass packages 5. The enclosing skin 13 partially constitutes an area of contact 14 against the glass sheets 3.

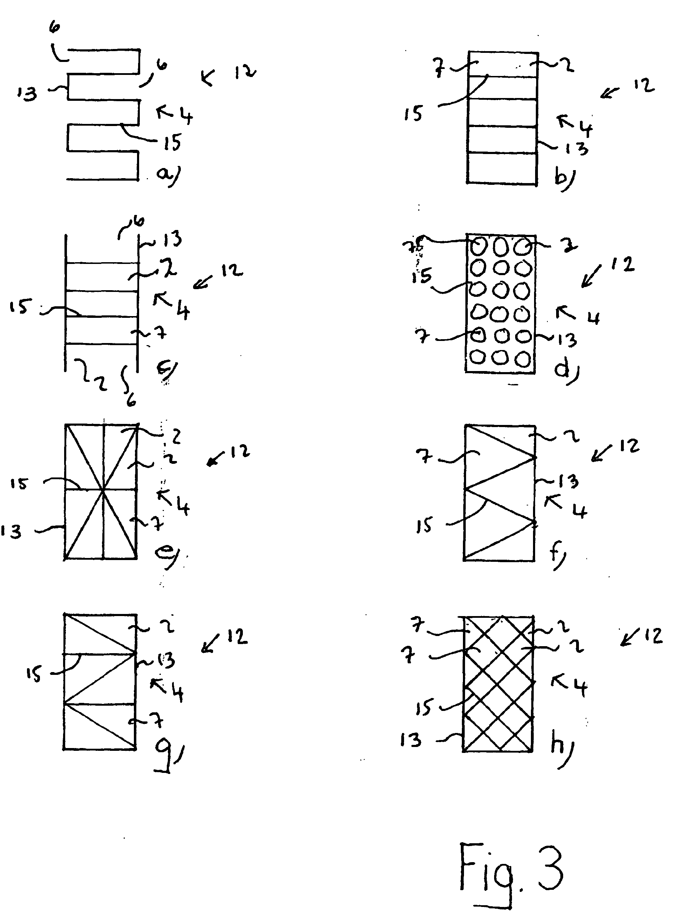

As Fig. 3 makes clear, there is shown in parts a)-h) various shapes of cavities 2 in the spacers 4 with intermediate walls 15 for the formation of the framework 12, whereby some of the cavities 2 are open 6 and some of the cavities are closed 7, whereby they are fully or partially enclosed by the walls 15. The framework 12 comprises said enclosing skin 13. The cavities 2 are comprising various shapes in cross-section such as, for example, U-shape, honeycomb, triangular shape, rectangular shape, circular shape, elliptical shape, or similar, or combinations of these shapes. Only open 6 rectangular shapes are shown in part a). Closed 7 rectangular shapes are shown in part b). Open 6 and closed 7 rectangular shapes are shown in part c). Closed 7 circular shapes are shown in part d). Closed 7 triangular shapes are shown in various designs in parts e) to g). Oblique closed 7 rectangular shapes with surrounding closed 7 triangular shapes are shown in part h).

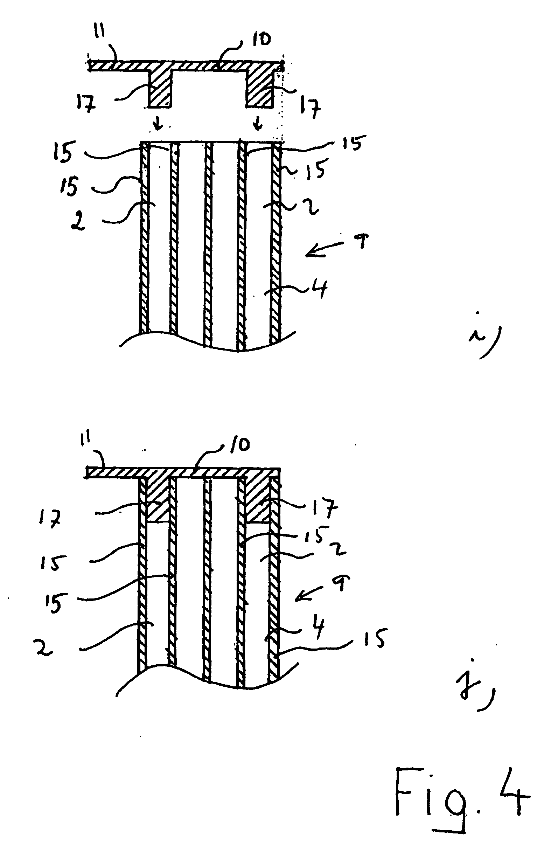

As Fig. 4 makes clear in parts i) and j), one end 9 of the spacer 4 comprises a holder 11 and an anchoring element 17, whereby the anchoring element 17 in part i) is to be brought into contact with of the cavities 2 against the walls 15 of this. A lid 10 can be brought into contact with or is part of the holder, whereby the lid 10 covers cavities 2, whereby no foreign objects can penetrate here, such as water, dirt, chemicals, etc., and cause damage to the spacers 4, when the anchoring elements 17 have been anchored as shown in part j). The holders 11 now function as suspension means for the spacers 4, whereby these are suspended at the upper edge 19 of the glass package, as shown in Figure 2.

## Claims

1. A spacer for creating distance (18) and for absorbing loads, pressure, relative motion between glass sheets (3) and/or between glass packages (5) containing several glass sheets (3), when they are packed in or on a packaging arrangement (1), preferably a support (8), **characterized in that** the spacer (4) is manufactured as an extruded profile that comprises essentially longitudinal cavities (2) and walls (15) for the formation of a framework (12) in the spacer (4), and one or several spacers (4) creating distance (18) and absorbing loads in the form of, for example, pressure, relative motions etc. between the glass sheets (3) and/or between the glass packages (5).

2. A spacer according to claim 1, **characterized in that** the same is manufactured of plastic, rubber, metal or combinations of these materials and said material resisting the influence of preferably damp, light, dirt, foreign objects, chemicals, etc., and which furthermore resists more mechanical damage.

3. A spacer according to claim 1, **characterized in that** the extruded profile is cut into lengths for a rapid and efficient manufacture, whereby said lengths are adapted to correspond essentially to the height and/or width of the glass sheet.

4. A spacer according to claim 1, **characterized in that** the cavities (2) of the spacer (4) are open (6) and/or closed (7), whereby they are wholly or partially enclosed by one or several walls (15).

5. A spacer according to claim 4, **characterized in that** the cavities (2) comprise various shapes in cross-section such as, for example, U-shape, honeycomb, triangular shape, rectangular shape, circular shape, elliptical shape, or similar, or combinations of these shapes.

6. A spacer according to claim 4 or 5, **characterized in that** the spacer (4) comprises a skin (13) that wholly or partially constitutes an area (14) of contact against the glass sheets (3).

7. A spacer according to any of the preceding claims, **characterized in that** spacer (4) comprises ends (9) to which at least one holder (11) is attached, which comprises at least one anchoring element (17) that is oriented in a direction down towards the end (9), whereby the anchoring element (17) is brought into contact to be fixed by the walls (15) of the cavities (2).

8. A spacer according to claim 7, **characterized in that** a lid (10) is brought into contact with or is part of the holder (11), said lid (10) covering the cavities (2), whereby foreign objects cannot to any major extent penetrate into the cavities (2).

## Patentansprüche

1. Abstandshalter zum Herstellen einer Distanz (18) und zur Aufnahme von Kräften, Druck, Relativbewegungen zwischen Glasscheiben (3) und/oder zwischen Glaspackungen (5), die mehrere Glasscheiben (3) beinhalten, wenn diese in oder an einer Verpackungsanordnung (1) verpackt sind, bevorzugt an einer Stütze (8), **dadurch gekennzeichnet, dass** der Abstandshalter (4) als extrudiertes Profil hergestellt wird, das im Wesentlichen längliche Ausnehmungen (2) und Wände (15) zur Formung eines Tragwerks (12) innerhalb des Abstandshalters (4) aufweist, wobei ein oder mehrere Abstandshalter (4) eine Distanz (18) herstellen und Kräfte in Form von beispielsweise Druck, Relativbewegungen etc. zwischen den Glasscheiben (3) und/oder zwischen den Glaspackungen (5) aufnehmen.

2. Abstandshalter nach Anspruch 1, **dadurch gekennzeichnet, dass** derselbe aus Plastik, Gummi, Metall oder Kombinationen aus diesen Materialien hergestellt ist und dass dieses Material dem Einfluss von insbesondere Feuchtigkeit, Licht, Schmutz, Fremdkörpern, Chemikalien etc. und darüber hinaus verstärkt mechanischer Beschädigung widersteht.

3. Abstandshalter nach Anspruch 1, **dadurch gekennzeichnet, dass** das extrudierte Profil zur schnellen und effizienten Herstellung in Längen abgeschnitten wird, wobei diese Längen derart angepasst werden, dass sie im Wesentlichen der Höhe und/oder der Breite der Glasscheibe entsprechen.

4. Abstandshalter nach Anspruch 1, **dadurch gekennzeichnet, dass** die Ausnehmungen (2) des Abstandshalters (4) offen (6) und/oder geschlossen (7) sind, wobei sie vollständig oder teilweise mittels einer oder mehrerer Wände (15) eingeschlossen sind.

5. Abstandshalter nach Anspruch 4, **dadurch gekennzeichnet, dass** die Ausnehmungen (2) unterschiedliche Querschnittsformen aufweisen, wie beispielsweise U-Form, Wabenstruktur (honeycomb), dreieckförmig, viereckförmig, rund, elliptisch oder ähnliche oder Kombinationen dieser Formen.

6. Abstandshalter nach Anspruch 4 oder 5, **dadurch gekennzeichnet, dass** der Abstandshalter (4) eine Haut (13) aufweist, die vollständig oder teilweise einen Kontaktbereich (14) zu den Glasscheiben (3) darstellt.

7. Abstandshalter nach einem der vorhergehenden Ansprüche, **dadurch gekennzeichnet, dass** der Abstandshalter (4) Enden (9) aufweist, an welchen wenigstens ein Halter (11) angebracht ist, der wenigstens ein Verankerungselement (17) aufweist, das in einer Richtung nach unten in Richtung des Endes (9) orientiert ist, wobei das Verankerungselement (17) in Kontakt gebracht wird durch Fixierung mittels der Wände (15) der Ausnehmungen (2).

8. Abstandshalter nach Anspruch 7, **dadurch gekennzeichnet, dass** eine Abdeckung (10) mit dem Halter (11) in Kontakt gebracht wird oder ein Teil dessen darstellt, wobei die Abdeckung (10) die Ausnehmungen (2) abdeckt, so dass Fremdkörper im größeren Ausmaß nicht in die Ausnehmungen (2) eintreten können.

## Revendications

1. Intercalaire pour créer de la distance (18) et pour absorber des charges, de la pression, un mouvement relatif entre des vitres (3) et/ou entre des emballages (5) de verre contenant plusieurs vitres (3) lorsqu'elles sont emballées dans ou suivant un agencement (1) d'emballage, de préférence support (8), **caractérisé en ce que** l'intercalaire (4) est fabriqué sous la forme d'un profilé extrudé qu comprend des cavités sensiblement longitudinales et des parois (15) de formation d'une ossature (12) dans l'intercalaire (4) et un ou plusieurs intercalaires (4) créant de la distance (18) et absorbant des charges sous la forme, par exemple, de pression, de mouvements relatifs, etc., entre les vitres (3) et/ou entre les emballages (5) de verre.

2. Intercalaire suivant la revendication 1, **caractérisé en ce qu'**il est fabriqué en matière plastique, en caoutchouc, en métal ou en des combinaisons de ces matières et la matière résistant à l'influence, de préférence, de la vapeur, de la lumière, de la saleté, des objets étrangers, des produits chimiques, etc. et qui résiste, en outre, à un endommagement mécanique.

3. Intercalaire suivant la revendication 1, **caractérisé en ce que** le profilé extrudé est découpé en tronçons pour une fabrication rapide et efficace, les tronçons étant adaptés pour correspondre essentiellement à la hauteur et/ou à la largeur de la vitre.

4. Intercalaire suivant la revendication 1, **caractérisé en ce que** les cavités (2) de l'intercalaire (4) sont ouvertes (6) et/ou fermées (7) en étant enfermées en tout ou partie par une ou par plusieurs parois (15).

5. Intercalaire suivant la revendication 4, **caractérisé en ce que** les cavités (2) comprennent diverses formes de section transversale, telles que par exemple une forme en U, une forme en nid d'abeille, une forme triangulaire, une forme rectangulaire, une forme circulaire, une forme elliptique ou analogue, ou des combinaisons de ces formes.

6. Intercalaire suivant la revendication 4 ou 5, **caractérisé en ce que** l'intercalaire (4) comprend une peau (13) qui constitue en tout ou partie une surface (14) de contact sur les vitres (3).

7. Intercalaire suivant l'une quelconque des revendications précédentes, **caractérisé en ce que** l'intercalaire comprend des extrémités (9) auxquelles est fixé au moins un dispositif (11) de maintien, qui comprend au moins un élément (17) d'arrimage qui est orienté dans une direction descendant vers l'extrémité (9), l'élément (17) d'arrimage étant mis en contact pour être fixé par les parois (15) des cavités (2).

8. Intercalaire suivant la revendication 7, **caractérisé en ce qu'**un couvercle (10) est mis en contact avec le dispositif (11) de maintien ou en fait partie, le couvercle (10) recouvrant les cavités (12), de sorte que des objets étrangers ne peuvent pas pénétrer dans une grande mesure dans les cavités (2).
